# EUROPEAN PATENT SPECIFICATION

(11) **EP 3 777 431 B1**
(45) Date of publication and mention of the grant of the patent: **28.02.2024**
(21) Application number: 18714753.3
(22) Date of filing: 28.03.2018
(51) Int. Cl.: H04W 74/02, H04W 74/04, H04W 74/08

(54) **FEEDBACK INDICATION FOR CONTINUED TRANSMISSION FOR WIRELESS NETWORKS**
RÜCKKOPPLUNGSANZEIGE FÜR FORTGESETZTE ÜBERTRAGUNG FÜR DRAHTLOSE NETZWERKE
INDICATION DE RÉTROACTION POUR UNE TRANSMISSION CONTINUE DANS DES RÉSEAUX SANS FIL

(43) Date of publication of application: 17.02.2021
(73) Proprietor: Nokia Technologies Oy, 02610 Espoo (FI)
(72) Inventor: LI, Zexian, 02340 Espoo (FI); UUSITALO, Mikko Aleksi, 00200 Helsinki (FI); SINGH, Bikramjit, 02210 Espoo (FI)
(74) Representative: Script IP Limited
(86) International application number: PCT/EP2018/057920
(87) International publication number: WO 2019/185134

(56) References cited:
- US-A1- 2010 014 423
- US-A1- 2012 294 204
- US-A1- 2016 302 231
- US-A1- 2016 352 454
- HUAWEI ET AL: "The retransmission and HARQ schemes for grant-free", 3GPP DRAFT; R1-1608859, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 1 October 2016 (2016-10-01), XP051159186, Retrieved from the Internet: URL:http://www.3gpp.org/ftp/tsg_ran/WG1_RL 1/TSGR1_86b/Docs/ [retrieved on 2016-10-01]
- HUAWEI ET AL: "HARQ timing relationships for grant-free transmission", 3GPP DRAFT; R1-167206, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Gothenburg, Sweden; 20160822 - 20160826 12 August 2016 (2016-08-12), XP051142226, Retrieved from the Internet: URL:http://www.3gpp.org/ftp/tsg_ran/WG1_RL 1/TSGR1_86/Docs/ [retrieved on 2016-08-12]

## Description

### TECHNICAL FIELD

This description relates to communications.

### BACKGROUND

A communication system may be a facility that enables communication between two or more nodes or devices, such as fixed or mobile communication devices. Signals can be carried on wired or wireless carriers.

An example of a cellular communication system is an architecture that is being standardized by the 3^{rd} Generation Partnership Project (3GPP). A recent development in this field is often referred to as the Long Term Evolution (LTE) of the Universal Mobile Telecommunications System (UMTS) radio-access technology. E-UTRA (evolved UMTS Terrestrial Radio Access) is the air interface of 3GPP's Long Term Evolution (LTE) upgrade path for mobile networks. In LTE, base stations or access points (APs), which are referred to as enhanced Node AP (eNBs), provide wireless access within a coverage area or cell. In LTE, mobile devices, or mobile stations are referred to as user equipments (UE). LTE has included a number of improvements or developments.

5G New Radio (NR) development is part of a continued mobile broadband evolution process to meet the requirements of 5G, similar to earlier evolution of 3G & 4G wireless networks. In addition, 5G is also targeted at the new emerging use cases in addition to mobile broadband. A goal of 5G is to provide significant improvement in wireless performance, which may include new levels of data rate, latency, reliability, number of connected devices and security. 5G NR may also scale to efficiently connect the massive Internet of Things (IoT), and may offer new types of mission-critical services. Ultra-reliable and low-latency communications (URLLC) services may require high reliability and very low latency. For example, a UE (e.g., a URLLC device) may have an ongoing URLLC service, although simultaneously, the UE or device may have other ongoing services as well.

US2010/014423 A1 discloses dividing transmissions into different communication types, each having an associated priority, and determining for each priority which access mode, direct access or scheduled access, to utilize for the associated communication type. US2016/352454 A1 discloses a scheme of link adaptation in uplink grant-less random access communications including changing a modulation and coding scheme between two packets of a transmission.

### SUMMARY

According to a method as in claim 11, the method includes transmitting, by a user device to a base station, an initial uplink transmission; receiving, by the user device from the base station, feedback indicating a continuing transmission mode to be used by the user device to perform a further transmission to the base station, the indicated continuing transmission mode being at least one of a grant-free uplink transmission mode and a grant-based uplink transmission mode that are both supported by the user device; and transmitting, by the user device to the base station, a further transmission via the indicated continuing transmission mode, wherein transmitting an initial uplink transmission comprises transmitting an initial grant-free uplink transmission; and wherein the further transmission is at least one of: a re-transmission of a packet; a transmission of one or more remaining transport blocks or code blocks of a packet that started transmission by the initial uplink transmission; and a transmission of a new packet.

According to an apparatus as in claim 1, the apparatus includes at least one processor and at least one memory including computer instructions, when executed by the at least one processor, cause the apparatus to: transmit, by a user device to a base station, an initial uplink transmission; receive, by the user device from the base station, feedback indicating a continuing transmission mode to be used by the user device to perform a further transmission to the base station, the indicated continuing transmission mode being at least one of a grant-free uplink transmission mode and a grant-based uplink transmission mode that are both supported by the user device; and transmit, by the user device to the base station, a further transmission via the indicated continuing transmission mode, wherein causing the apparatus to transmit an initial uplink transmission comprises causing the apparatus to transmit an initial grant-free uplink transmission; and wherein the further transmission is at least one of: a re-transmission of a packet; a transmission of one or more remaining transport blocks or code blocks of a packet that started transmission by the initial uplink transmission; and a transmission of a new packet.

According to a method as in claim 12, the method includes receiving, by a base station from a user device, at least of a portion of an initial uplink transmission; transmitting, by the base station to the user device, feedback indicating a continuing transmission mode to be used by the user device to perform a further transmission to the base station, the indicated continuing transmission mode being at least one of a grant-free uplink transmission mode and a grant-based uplink transmission mode that are both supported by the user device; and receiving, by the base station from the user device, a further transmission via the indicated continuing transmission mode, wherein receiving an initial uplink transmission comprises receiving an initial grant-free uplink transmission; and wherein the further transmission is at least one of: a re-transmission of a packet; a transmission of one or more remaining transport blocks or code blocks of a packet that started transmission by the initial uplink transmission; and a transmission of a new packet.

According to an apparatus as in claim 6, the apparatus includes at least one processor and at least one memory including computer instructions, when executed by the at least one processor, cause the apparatus to: receive, by a base station from a user device, at least of a portion of an initial uplink transmission; transmit, by the base station to the user device, feedback indicating a continuing transmission mode to be used by the user device to perform a further transmission to the base station, the indicated continuing transmission mode being at least one of a grant-free uplink transmission mode and a grant-based uplink transmission mode that are both supported by the user device; and receive, by the base station from the user device, a further transmission via the indicated continuing transmission mode, wherein receiving at least a portion of an initial uplink transmission comprises receiving at least a portion of an initial grant-free uplink transmission; and wherein the further transmission is at least one of: a re-transmission of a packet; a transmission of one or more remaining transport blocks or code blocks of a packet that started transmission by the initial uplink transmission; and a transmission of a new packet.

The invention also relates to a computer program product as disclosed in claim 13. Additional aspects of the invention are disclosed in the dependent claims.

The details of one or more examples of embodiments are set forth in the accompanying drawings and the description below.

### BRIEF DESCRIPTION OF THE DRAWINGS

FIG. 1 is a block diagram of a wireless network according to an example embodiment.
FIG. 2 is a diagram illustrating operation of a user device (or UE) and a base station (BS) according to an example embodiment.
FIG. 3 is a diagram illustrating operation of a network according to another example embodiment.
FIG. 4 is a diagram illustrating operation of a network according to another example embodiment.
FIG. 5 is a flow chart illustrating operation of a user device/UE according to another example embodiment.

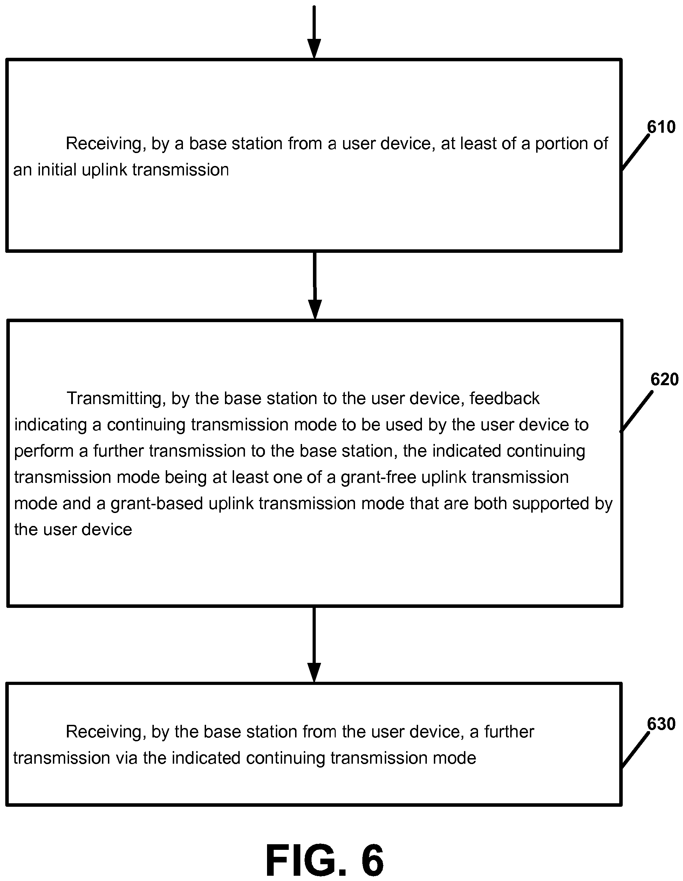

FIG. 6 is a flow chart illustrating operation of a base station according to another example embodiment.
FIG. 7 is a block diagram of a node or wireless station (e.g., base station/access point or mobile station/user device/UE) according to an example embodiment.

### DETAILED DESCRIPTION

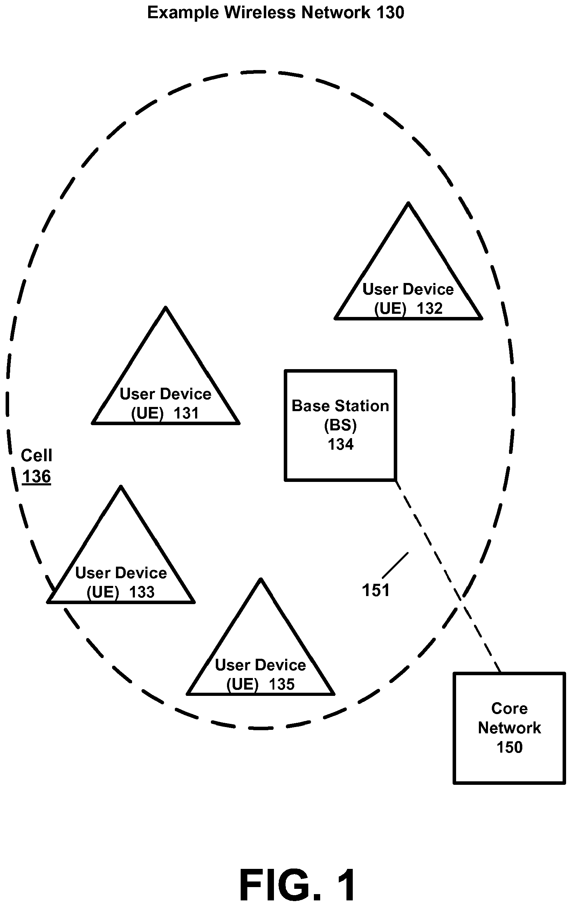

FIG. 1 is a block diagram of a wireless network 130 according to an example embodiment. In the wireless network 130 of FIG. 1, user devices 131, 132, 133 and 135, which may also be referred to as mobile stations (MSs) or user equipment (UEs), may be connected (and in communication) with a base station (BS) 134, which may also be referred to as an access point (AP), an enhanced Node B (eNB), a gNB, or a network node. At least part of the functionalities of an access point (AP), base station (BS), (e)Node B (eNB) or gNB may be also be carried out by any node, server or host which may be operably coupled to a transceiver, such as a remote radio head. BS (or AP) 134 provides wireless coverage within a cell 136, including to user devices 131, 132, 133 and 135. Although only four user devices are shown as being connected or attached to BS 134, any number of user devices may be provided. BS 134 is also connected to a core network 150 for example via a S1 interface 151. This is merely one simple example of a wireless network, and others may be used.

A user device (user terminal, user equipment (UE) or mobile station) may refer to a portable computing device that includes wireless mobile communication devices operating with or without a subscriber identification module (SIM), including, but not limited to, the following types of devices: a mobile station (MS), a mobile phone, a cell phone, a smartphone, a personal digital assistant (PDA), a handset, a device using a wireless modem (alarm or measurement device, etc.), a laptop and/or touch screen computer, a tablet, a phablet, a game console, a notebook, and a multimedia device, as examples. It should be appreciated that a user device may also be a nearly exclusive uplink only device, of which an example is a camera or video camera loading images or video clips to a network.

In LTE (as an example), core network 150 may be referred to as Evolved Packet Core (EPC), which may include a mobility management entity (MME) which may handle or assist with mobility/handover of user devices between BSs, one or more gateways that may forward data and control signals between the BSs and packet data networks or the Internet, and other control functions or blocks.

In addition, the techniques described herein may be applied to various types of user devices or data service types, or may apply to user devices that may have multiple applications running thereon that may be of different data service types. New Radio (5G) development may support a number of different applications or a number of different data service types, such as for example: machine type communications (MTC), enhanced machine type communication (eMTC), Internet of Things (IoT), and/or narrowband IoT user devices, enhanced mobile broadband (eMBB), and ultra-reliable and low-latency communications (URLLC).

IoT may refer to an ever-growing group of objects that may have Internet or network connectivity, so that these objects may send information to and receive information from other network devices. For example, many sensor type applications or devices may monitor a physical condition or a status, and may send a report to a server or other network device, e.g., when an event occurs. Machine Type Communications (MTC, or Machine to Machine communications) may, for example, be characterized by fully automatic data generation, exchange, processing and actuation among intelligent machines, with or without intervention of humans. Enhanced mobile broadband (eMBB) may support much higher data rates than currently available in LTE.

Ultra-reliable and low-latency communications (URLLC) is a new data service type, or new usage scenario, which may be supported for New Radio (5G NR) systems. This enables emerging new applications and services, such as industrial automations, autonomous driving, enhance vehicular applications, e-health services, and so on. Within Rel-15 (release 15), 3GPP targets in providing connectivity with reliability corresponding to block error rate (BLER) of 10⁻⁵ and up to 1 ms U-Plane (user/data plane) latency, by way of illustrative example. Thus, for example, URLLC user devices/UEs may require a significantly lower block error rate than other types of user devices/UEs as well as low latency (with or without requirement for simultaneous high reliability)

The teachings of the invention may be applied to a wide variety of wireless technologies or wireless networks, such as LTE, LTE-A, 5G, cmWave, and/or mmWave band networks, IoT, MTC, eMTC, eMBB, URLLC, etc., or any other wireless network or wireless technology. These example networks, technologies or data service types are provided only as illustrative examples.

According to a grant-based (scheduled) transmission mode, a UE may send a scheduling request to obtain uplink resources, and then the UE may either send data or send a buffer status report (BSR) via such UL resource to request additional resources or both. This process may introduce significant latency, e.g., which may be unacceptable for some types of UEs, such as URLLC UEs with ongoing URLLC services. Likewise, according to an example embodiment, a UE may transmit data to a BS using a grant-free transmission mode. However, a grant-free transmission mode, in some cases, may be unreliable, especially when there may be many UEs attempting to transmit using a shared set of resources (e.g., due to collisions between UE transmissions).

Therefore, rather than using a fixed or static transmission mode for a transmission or a further (or continuing) transmission, a more flexible transmission approach may be used. According to an example embodiment, a BS may dynamically control or configure a UE to perform a transmission or further transmission (or continued transmission) according to a selected mode of transmission out of a plurality of uplink transmission modes that are supported by both the UE and BS. Such a flexible transmission mode may allow a BS or network to configure a UE to perform a transmission (or continuing transmission or further transmission) according to the situation or state of a network. In this manner, a BS or network may configure or request a UE to use a transmission mode for uplink transmission (including for continuing or further transmission), e.g., to improve reliability and/or decrease latency.

Two modes of uplink transmission may be used by a UE to transmit to a BS, including a grant-based (scheduled) uplink transmission mode, and grant-free uplink transmission mode.

In a grant-based (scheduled) uplink transmission mode, a UE may transmit a scheduling request to a BS, in order to request an allocation of resources for uplink transmission. A scheduling request may be transmitted via a scheduled (contention-free) resource(s) allocated to the UE, or transmitted via a contention-based resource. Also, for example, a scheduling request may carry a bit or flag (e.g., indicating a UE request to the BS for uplink resources), which may be, for example, transmitted via a physical uplink control channel (PUCCH). In another example embodiment of a scheduling request, a UE may transmit a small amount of data (or alternatively, no data at all) along with a buffer status report (e.g., to report an amount of data stored in a data buffer of the UE awaiting uplink transmission) via an uplink control channel (e.g., via PUCCH) to the BS. In response to the scheduling request or the buffer status report, the BS may then allocate resources and transmit to the UE an uplink grant (indicating a grant of resources allocated to the UE to perform uplink transmission on a data channel), e.g., via a downlink control channel (such as via a physical downlink control channel (PDCCH), for example). The UE may then transmit data to the BS via the time-frequency resources indicated by the uplink grant. Thus, the grant-based (scheduled) uplink transmission allows a UE to transmit data to the BS via a scheduled or exclusive (contention-free) time-frequency resources. The grant-based (scheduled) uplink transmission mode avoids contention with other UEs, and is therefore considered reliable (or at least more reliable than a contention-based transmission mode). However, for the grant-based (scheduled) uplink transmission mode, the process of the UE including at least requesting an uplink grant of resources, and waiting for the uplink grant from the BS may introduce significant delay at the UE before the UE may transmit the data, which, in some cases, may be unacceptable for some applications that may require very low latency, e.g., such as URLLC, for example.

In a grant-free uplink transmission, a BS may first configure a UE for grant-free uplink transmission, e.g., by providing (or configuring) the UE with information indicating a pool of time-frequency resources for the UE for uplink transmission, and one or more transmission parameters for the grant-free uplink transmission, such as a modulation and coding scheme (MCS), a transmission repetition parameter that may indicate a number of times the UE may transmit a packet, a transmission power, and/or other transmission parameter. The set (or pool) of resources may be allocated to the UE (as a dedicated resource), or more generally, for a group of UEs (e.g., as a shared set or pool of time-frequency resources, allocated among a plurality of UEs). Carrier sense may, or may not, be used for grant-free uplink transmission, depending on the embodiment. For example, according to a grant-free uplink transmission, a UE transmit (or attempt to transmit) to a BS via a resource(s) of a shared set of resources, which are shared with other UEs. Thus, for a grant-free uplink transmission (which may typically be a contention-based access), the uplink transmission from the UE may collide with an uplink transmission from another UE that has been assigned to the same set of resources for uplink transmission. Thus, while the grant-free uplink transmission mode may provide a lower latency than the grant-based (scheduled) uplink transmission mode, the grant-free uplink transmission mode may be less reliable than the grant-based (scheduled) uplink transmission mode due to use of a shared set of resources (e.g., typically shared among multiple UEs) and possible collisions with other UEs, for example.

A BS may control or configure a UE to perform a transmission, or to perform a further transmission (a continuing transmission) using a selected uplink transmission mode, e.g., as either a grant-free uplink transmission mode, or a grant-based (scheduled) uplink transmission mode, e.g., depending on the circumstances, or depending on which transmission mode the BS may prefer the UE to use, e.g., so as to improve reliability and/or reduce latency for the UE.

A further transmission (or continuing transmission) may include a retransmission of a failed data transmission (data packet that was not received and/or a NACK was received indicating the data should be retransmitted), or a transmission of new data (e.g., either a new coding block of a same transport block as an initial transmission, or a transmission of a new packet) after an initial data transmission by a UE). For example, a BS may indicate a continuing transmission mode (e.g., as feedback to the UE) to be used by the UE to perform a further (or continuing) uplink transmission, e.g., in response to BS receiving at least a portion of an initial transmission from the UE. The feedback may, for example, may also indicate (or include) an ACK (acknowledgement that acknowledges receipt of the initial transmission) or a NACK (that indicates that the UE should retransmit the data of the initial transmission). Thus, according to an example embodiment, the BS may send feedback to the UE that provides either an ACK or NACK for the initial transmission, and information indicating a continuing transmission mode for the UE to perform a further (or continuing) transmission as either a grant-free uplink transmission mode or a grant-based (scheduled) uplink transmission mode.

Thus, based on different circumstances, such as based on different number of UEs in a cell that are connected to a BS, different amounts of congestion, different numbers or amounts of latency, or different numbers of collisions, it may be more advantageous for a UE to use one uplink transmission mode or another uplink transmission mode, e.g., in order to increase reliability and/or decrease latency of a continuing (or further) transmission. For example, when there are few (e.g., less than a threshold of) UEs allocated to a set of shared resources for grant-free uplink transmission (meaning that it may be less likely that a collision between UEs will occur when transmitting using contention-based grant-free uplink transmission mode), it may be advantageous, at least in some cases, for a UE to perform an uplink transmission via grant-free uplink transmission mode in order to reduce latency, e.g., while still providing an acceptable reliability. On the other hand, at least in some cases, if there are many UEs configured with the same grant-free resource pool and attempting to transmit to the BS (thus, a probability of a collision between UEs using a grant-free uplink transmission mode may be much higher), then it may be advantageous for a UE to transmit via a grant-based (scheduled) uplink transmission mode, e.g., in order to increase or improve reliability of the uplink transmission.

Therefore, after receiving an initial transmission from a UE (e.g., which may be transmitted via either grant-free uplink transmission mode or grant-based uplink transmission mode), the BS may transmit information or feedback to the UE indicating a continuing transmission mode to be used by the UE to perform a further transmission to the BS. For example, the BS may be aware, or may become aware, of the number of UEs within a cell, or a number of UEs that have been allocated or assigned a set of shared resources for grant-free uplink transmission mode. Thus, the BS may determine or estimate a likelihood or probability that a collision may occur when a UE within such cell may transmit using a grant-free transmission mode. For example, if the likelihood of a collision between UEs in a cell using grant-free uplink transmission is greater than a threshold, then the BS may, for example, select a grant-based (scheduled) uplink transmission mode for a UE to perform a further transmission or continuing transmission. Thus, as a simple example, if there at least a threshold number of UEs within a cell or at least a threshold number of UEs assigned to a set of shared resources for grant-free uplink transmission mode, then the BS may control or configure one or more of the UEs to perform an uplink transmission, such as a continuing or further transmission, via the grant-based uplink transmission mode, e.g., so as to improve reliability of such uplink transmission.

On the other hand, if the probability of a collision between UEs transmitting via grant-free uplink transmission is less than a threshold, or if there are less than a threshold number of UEs in the cell or less than a threshold number of UEs allocated a set of shared resources for grant-free uplink transmission mode, then the BS may control or configure one or more UEs in the cell to perform a transmission or further (or continuing) transmission using the grant-free uplink transmission mode, e.g., to reduce latency while providing an acceptable reliability for the uplink transmissions. These are merely some examples, and the BS may use different criteria for controlling or configuring a UE to use one of the uplink transmission modes for a further or continuing uplink transmission.

Thus, a more flexible transmission mode configuration may be provided, e.g., to allow a BS or network to select a transmission mode that is suitable for a state of a network, e.g., in order to improve reliability and/or decrease latency. For example, a UE and BS may support multiple transmission modes for uplink transmission (e.g., for continuing transmission or further transmission), and a flexible solution is provided in which the BS may control or configure the UE to use a selected one of the plurality of transmission modes as the continuing transmission mode, e.g., as either a grant-free uplink transmission mode or a grant-based uplink transmission mode, both of which are supported by both the UE and BS.

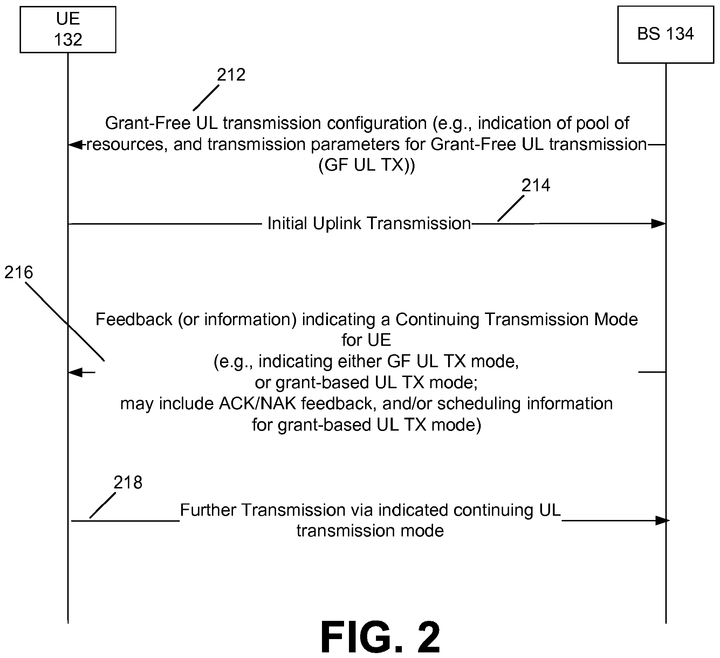

FIG. 2 is a diagram illustrating operation of a user device (or UE) and a base station (BS). A UE 132 may be connected or in communication with BS 134. At 212, BS 134 may configure UE 132 for grant-free uplink transmission (GFUT, or GF UL TX). For example, at 212, BS 134 may send control information to the UE 132 indicating a pool or multiple pools of time-frequency resources and one or more transmission parameters for grant-free uplink transmission. In an illustrative example, the one or more transmission parameters for the grant-free uplink transmission may include, e.g., as a modulation and coding scheme (MCS), a transmission repetition parameter that may indicate a number of times the UE may transmit a packet, a transmission power, and/or other transmission parameter.

At 214, the UE 132 may send an initial uplink transmission to BS 134. The initial uplink transmission may be transmitted via either grant-free uplink transmission mode, or via grant-based (scheduled) uplink transmission mode. Some of the examples described herein are described with the UE transmitting the initial uplink transmission using a grant-free uplink transmission mode, but a grant-based uplink transmission mode may be used as well for the initial transmission. The BS 134 may receive (e.g., detect and/or decode) and/or attempt to receive (e.g., attempt to decode) the initial transmission. A field within a header of the initial transmission may include a UE identifier (UE ID), e.g., such as a C-RNTI (cell radio network temporary identifier) or other ways of carrying UE ID for example via demodulation reference symbol (DMRS) or preamble. In an example embodiment, the BS may send feedback to the UE, e.g., in response to receiving (or detecting or decoding) at least the UE ID of the initial data transmission.

At 216, BS 134 may send feedback to the UE 132, indicating a continuing transmission mode for the UE to use for a continuing or further uplink transmission. For example, the feedback may indicate either a grant-free uplink transmission mode or a grant-based (scheduled) uplink transmission mode, e.g., to be used for a further or continuing transmission, where the BS and the UE both support both of these transmission modes. For example, a flag, a bit, or other control information may be provided as feedback to indicate the continuing transmission mode to be used for a further (or continuing) uplink transmission. The feedback may also include ACK/NACK feedback for the initial uplink transmission. Also, if the grant-based uplink transmission mode is indicated as the continuing transmission mode, then the BS may include scheduling information to identify resources for the grant-based (or scheduled) uplink transmission, e.g., as part of the feedback to the UE or such information can be delivered with another control message.

Also, the indication of the continuing transmission mode at 216 to be used for a continuing or further uplink transmission may be indicated based on including (or presence of) or not including scheduling information within the feedback. For example, the feedback may include a scheduling information (e.g., UL grant information, including indication of UL resources and/or other parameters describing resources that may be used as part of a grant-based uplink transmission) to indicate that a grant-based (scheduled) uplink transmission mode is selected as the continuing transmission mode. And, feedback (e.g., which may include ACK/NACK feedback for the initial transmission) may be provided by the BS to the UE that does not include scheduling information if a grant-free uplink transmission mode has been selected as the continuing transmission mode. Thus, in an illustrative example, a presence of scheduling information may, for example, indicate a grant-based uplink transmission mode as the continuing transmission mode, and an absence of such scheduling information in the feedback may indicate a grant-free uplink transmission mode is to be used for the continuing transmission mode. Thus, for example, a presence or absence of scheduling information within the feedback at 216 may indicate or correspond to a selected continuing transmission mode for the UE.

Referring to FIG. 2, at 218, UE 132 may send a further (or continuing) transmission via the indicated continuing uplink transmission mode to BS 134. Thus, at 218, for example, UE 132 may transmit or send a further or continuing transmission via grant-free (GF) uplink (UL) transmission mode if a grant-free uplink transmission mode is indicated at 216 via feedback as the continuing transmission mode. Or, for example, UE 132 may transmit or send a further or continuing transmission via a grant-based (scheduled) UL transmission mode if grant-based (scheduled) UL transmission mode is indicated at 216 via feedback as the continuing transmission mode.

Feedback at 216 (e.g., in response to grant-free uplink transmission (GFUT) received from UE) may be provided for GFUT initiated transmission, which allows the possibility of grant-free (GFUT) or grant-based (scheduled) transmission for the continuing transmission. This continuing (or further) transmission may be, for example (where a packet may be segmented into multiple transport blocks (TBs) or code blocks (CBs)):
1) a re-transmission (transmission of an erroneous or unreceived transport block (TB) or code block (CB)) of a packet, and/or
2) a transmission of a remaining (or subsequent) TB/CB (or TBs/CBs) of the packet that was started transmission by the initial transmission, and/or
3) a transmission of a new packet. In this scenario, BS/network may request the UE to transmit the next packet (which may or may not have arrived in UE's buffer) in a grant-free or grant-based (scheduled) manner. For example, BS 134 may direct (or control or instruct) UE 132 not to use GFUT for the probable next packet (instead use grant-based transmission with a scheduling request). BS directs the UE (based on feedback from BS) the continued transmission mode that the UE should use for further transmission after the initial GFUT.

Thus, the BS may send the UE feedback (with or without schedule information for the continuing transmission), to indicate the continuing transmission mode for continuing or further transmission by the UE.

The feedback may also include ACK/NACK feedback from the BS with respect to the initial transmission from the UE (e.g., either acknowledging receipt of such initial transmission via ACK feedback, or requesting a retransmission of the initially transmitted data via NACK feedback).

Benefit or technical advantages: the feedback mechanism allows the flexibility of the network or BS to dynamically control or configure the use of either grant-free or grant-based transmission mode as the continuing uplink transmission mode, e.g., in order to reduce latency and/or increase reliability, depending on the state of the network or cell (e.g., amount of traffic, number of collisions, number of UEs within a cell, or amount of congestion or delay, within the cell, ...).

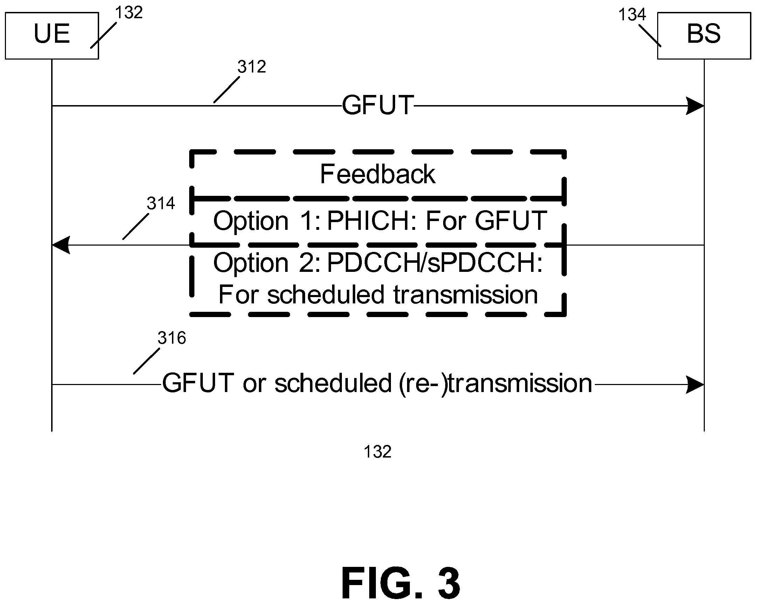

FIG. 3 is a diagram illustrating operation of a network. At 312, UE may send BS 134 an initial uplink transmission via a grant-free transmission mode. At 314, BS 134 may provide feedback to the UE 132 that indicates a continuing transmission mode to be used by the UE to perform a further or continuing transmission. At 314, BS 134 then provides feedback to the UE: e.g., where the feedback may include ACK/NACK feedback, and to indicate a continuing transmission mode for the UE. There may be several options for feedback to indicate a continuing transmission mode. Two options are shown in FIG. 3 for providing feedback, by way of illustrative examples:

Option 1) Send ACK/NACK feedback without scheduling information to indicate grant-free uplink transmission mode for continuing or further uplink transmissions. To continue with GFUT, BS 134 conveys ACK or NACK feedback for the initial transmission, but without scheduling (or scheduled) information. For example, BS 134 may send feedback via a control channel, such as physical downlink control channel (PDCCH) and/or Physical Hybrid-ARQ Indicator Channel (PHICH). ACK: indicates that the network (BS 134) received the UE's GFUT TB (transport block) of initial transmission successfully. NACK: indicates that the network (BS 134) did not receive the data correctly in the GFUT . UE re-transmits the TB in a grant-free manner. If there are remaining TBs in the UE's buffer, they are assumed for GFUTs unless and otherwise new feedback is received (where it asked to do scheduled transmission).

Option 2) Send ACK/NACK feedback with scheduling information to indicate grant-based (scheduled) uplink transmission mode for continuing or further uplink transmissions. Thus, by providing feedback from BS 134 to UE 132 that includes scheduling information, this may instruct the UE 132 to use the grant-based (scheduled) uplink transmission for continued transmissions (then this indicates that the UE should use the scheduled resource for continuing or further transmission). Thus, under this option, the BS sends ACK/NACK feedback with scheduling information (for continuing or further transmission) to indicate that the UE should use grant based (scheduled) transmission for continuing or further transmission. To indicate a grant-based (scheduled) uplink transmission as the continuing transmission mode, BS 134 conveys ACK or NACK with scheduled (or scheduling) resource information, such as an indication of time-frequency resources (e.g., specify PRBs, or starting PRB and no. of PRBs allocated), and one or more transmission parameters for continuing transmission, such as transmission power, MCS, e.g., via PDCCH. ACK: indicates that the BS 134 received the UE's GFUT TB (transport block sent via initial transmission) successfully. The remaining TBs are transmitted on scheduled resource indicated with ACK. NACK: indicates that the BS 134 did not receive the data correctly in the GFUT TB of initial transmission. UE 132 re-transmits the TB (transport block) on a scheduled resource indicated with NACK. Remaining TBs can be transmitted on scheduled resource if scheduled allocation is provided in the NACK (under this option, a scheduled resource (scheduling information information) is provided). PHICH and PDCCH, are only examples of control channels that may be used to convey ACK/NACK FB, and other control channels may be used. As another embodiment, in case the initial UL grant free transmission is received correctly, BS 132 may convey ACK with indication of the transmission mode for continuing transmission as grant-based UL transmission, but no detailed resource information. This will be applied to at least the case where the new data packet has not arrived at UE buffer yet.

Also, referring to FIG. 3, at 316, the UE then performs a continuing or further transmission via the indicated uplink transmission mode, e.g., via either grant-free uplink transmission mode or via a grant-based (scheduled) uplink transmission mode.

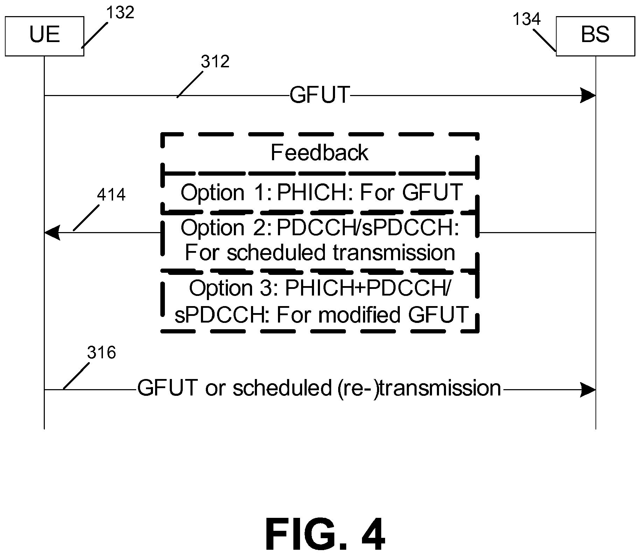

FIG. 4 is a diagram illustrating operation of a network. FIG. 4 is very similar to FIG. 3, but the feedback at 414 includes a third option (option 3). In option 3 shown in FIG. 4, two example control channels are used to provide feedback, but in some cases it is possible that only one control channel may be used, for example. Option 3 may be used to send ACK/NACK feedback, with additional information for GFUT transmission (modified GFUT), in which BS indicates that one or more parameters for a grant-free uplink transmission (GFUT) has changes. For example, the BS may indicate a change in a GFUT resource pool allocated to the UE, e.g., a different set of PRBs or time-frequency resources. Or, BS 134 may indicate a change to one or more transmission parameters for GFUT, e.g., to indicate an updated (e.g., changed) MCS, an updated transmission repetition (indicating how many times a packet can be transmitted by UE to BS), an updated transmission power. Thus, the modified GFUT information provided via feedback of option 3) may be applied to any of the control channel options, PHICH, or PDCCH, or other control channel. Also, the modified GFUT information may modify (or indicate a change to) a GFUT parameter. For example, in modified GFUT mode (e.g., option 3) in which updated GFUT parameters may be provided to UE 132), the BS 134 may send ACK/NACK feedback via PHICH, and further (or modified) GFUT information in PDCCH. Or all (ACK/NACK feedback + further GFUT info) by a new PDCCH format that may accommodate both types of information. Thus, may transmit this information (ACK/NACK feedback and modified GFUT information) via one control channel, or via multiple control channels.

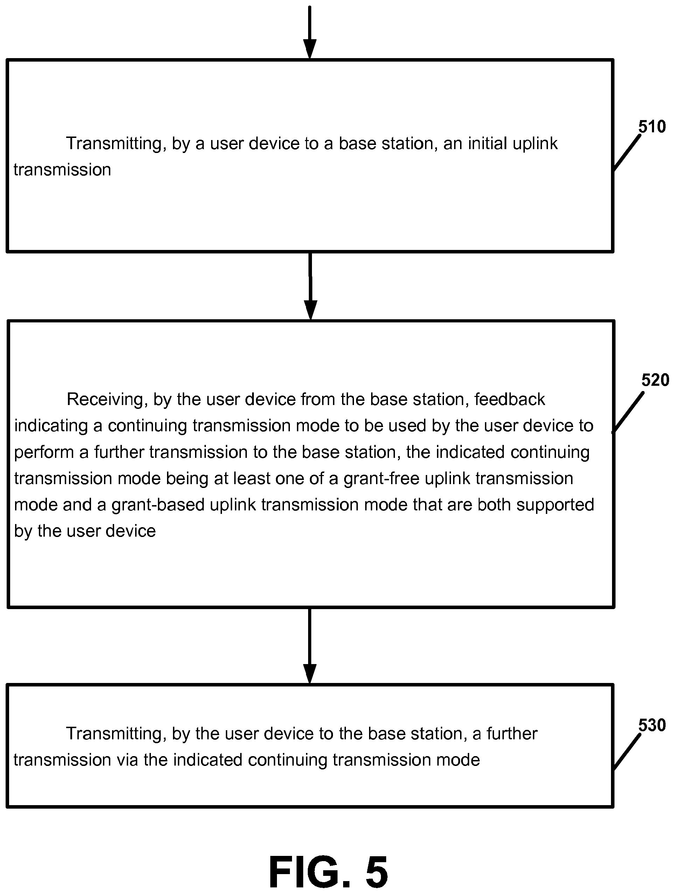

FIG. 5 is a flow chart illustrating operation of a user device/UE. Operation 510 includes transmitting, by a user device to a base station, an initial uplink transmission. Operation 520 includes receiving, by the user device from the base station, feedback indicating a continuing transmission mode to be used by the user device to perform a further transmission to the base station, the indicated continuing transmission mode being at least one of a grant-free uplink transmission mode and a grant-based uplink transmission mode that are both supported by the user device. And, operation 530 includes transmitting, by the user device to the base station, a further transmission via the indicated continuing transmission mode.

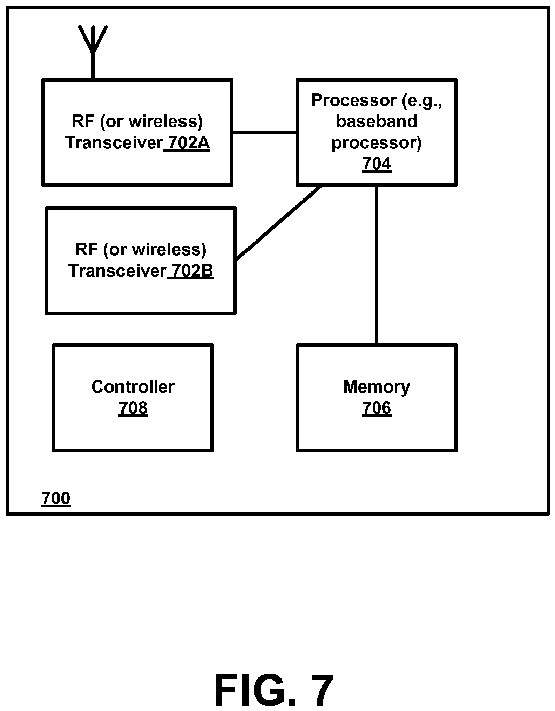

FIG. 7 is a block diagram of a wireless station (e.g., AP, BS, eNB, UE or user device) 700 according to an example embodiment. The wireless station 700 may include, for example, one or two RF (radio frequency) or wireless transceivers 702A, 702B, where each wireless transceiver includes a transmitter to transmit signals and a receiver to receive signals. The wireless station also includes a processor or control unit/entity (controller) 704 to execute instructions or software and control transmission and receptions of signals, and a memory 706 to store data and/or instructions.

Processor 704 may also make decisions or determinations, generate frames, packets or messages for transmission, decode received frames or messages for further processing, and other tasks or functions described herein. Processor 704, which may be a baseband processor, for example, may generate messages, packets, frames or other signals for transmission via wireless transceiver 702 (702A or 702B). Processor 704 may control transmission of signals or messages over a wireless network, and may control the reception of signals or messages, etc., via a wireless network (e.g., after being down-converted by wireless transceiver 702, for example). Processor 704 may be programmable and capable of executing software or other instructions stored in memory or on other computer media to perform the various tasks and functions described above, such as one or more of the tasks or methods described above. Processor 704 may be (or may include), for example, hardware, programmable logic, a programmable processor that executes software or firmware, and/or any combination of these. Using other terminology, processor 704 and transceiver 702 together may be considered as a wireless transmitter/receiver system, for example.

In addition, referring to FIG. 7, a controller (or processor) 708 may execute software and instructions, and may provide overall control for the station 700, and may provide control for other systems not shown in FIG. 7 such as controlling input/output devices (e.g., display, keypad), and/or may execute software for one or more applications that may be provided on wireless station 700, such as, for example, an email program, audio/video applications, a word processor, a Voice over IP application, or other application or software.

In addition, a storage medium may be provided that includes stored instructions, which when executed by a controller or processor may result in the processor 704, or other controller or processor, performing one or more of the functions or tasks described above.

According to another example embodiment, RF or wireless transceiver(s) 702A/702B may receive signals or data and/or transmit or send signals or data. Processor 704 (and possibly transceivers 702A/702B) may control the RF or wireless transceiver 702A or 702B to receive, send, broadcast or transmit signals or data.

Another example of a suitable communications system is the 5G concept. It is assumed that network architecture in 5G will be quite similar to that of the LTE-advanced. 5G is likely to use multiple input - multiple output (MIMO) antennas, many more base stations or nodes than the LTE (a so-called small cell concept), including macro sites operating in co-operation with smaller stations and perhaps also employing a variety of radio technologies for better coverage and enhanced data rates.

It should be appreciated that future networks will most probably utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations may be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers.

Furthermore, the various techniques described herein may use a cyber-physical system (CPS) (a system of collaborating computational elements controlling physical entities). CPS may enable the embodiment and exploitation of massive amounts of interconnected ICT devices (sensors, actuators, processors microcontrollers,...) embedded in physical objects at different locations. Mobile cyber physical systems, in which the physical system in question has inherent mobility, are a subcategory of cyber-physical systems. Examples of mobile physical systems include mobile robotics and electronics transported by humans or animals. The rise in popularity of smartphones has increased interest in the area of mobile cyber-physical systems. Therefore, various embodiments of techniques described herein may be provided via one or more of these technologies.

A computer program, such as the computer program(s) described above, can be written in any form of programming language, including compiled or interpreted languages, and can be deployed in any form, including as a stand-alone program or as a module, component, subroutine, or other unit or part of it suitable for use in a computing environment. A computer program can be deployed to be executed on one computer or on multiple computers at one site or distributed across multiple sites and interconnected by a communication network.

Method steps may be performed by one or more programmable processors executing a computer program or computer program portions to perform functions by operating on input data and generating output. Method steps also may be performed by, and an apparatus may be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer, chip or chipset. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

To provide for interaction with a user, embodiments may be implemented on a computer having a display device, e.g., a cathode ray tube (CRT) or liquid crystal display (LCD) monitor, for displaying information to the user and a user interface, such as a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The implementation may involve a computing system that includes a back-end component, e.g., as a data server, or that includes a middleware component, e.g., an application server, or that includes a front-end component, e.g., a client computer having a graphical user interface or a Web browser through which a user can interact with an embodiment, or any combination of such back-end, middleware, or front-end components. Components may be interconnected by any form or medium of digital data communication, e.g., a communication network. Examples of communication networks include a local area network (LAN) and a wide area network (WAN), e.g., the Internet.

## Claims

1. An apparatus comprising at least one processor (704) and at least one memory (706) including computer instructions, which when executed by the at least one processor, cause the apparatus to:
transmit, by a user device (132) to a base station (134), an initial uplink transmission;
receive, by the user device from the base station, feedback indicating a continuing transmission mode to be used by the user device to perform a further transmission to the base station, the indicated continuing transmission mode being at least one of a grant-free uplink transmission mode and a grant-based uplink transmission mode that are both supported by the user device; and
transmit, by the user device to the base station, a further transmission via the indicated continuing transmission mode, wherein causing the apparatus to transmit an initial uplink transmission comprises causing the apparatus to transmit an initial grant-free uplink transmission; and wherein the further transmission is at least one of:
a re-transmission of a packet;
a transmission of one or more remaining transport blocks or code blocks of the packet that started transmission by the initial uplink transmission; and
a transmission of a new packet.

2. The apparatus of claim 1 wherein the feedback also comprises:
Acknowledgement/Negative Acknowledgement (ACK/NACK) feedback for the initial uplink transmission.

3. The apparatus of any of claims 1 to 2 wherein the feedback indicating a continuing transmission mode to be used by the user device to perform a further transmission to the base station comprises:
feedback that includes a scheduling information for a grant-based uplink transmission if the grant-based (scheduled) transmission mode is to be used by the user device as the continuing transmission mode.

4. The apparatus of any of claims 1 to 3 wherein the feedback indicating a continuing transmission mode to be used by the user device to perform a further transmission to the base station comprises:
feedback that indicates using a grant-free uplink transmission if the grant-free uplink transmission mode is to be used by the user device as the continuing transmission mode, and optionally the feedback further comprises the following if the grant-free uplink transmission mode is to be used by the user device as the continuing transmission mode:
one or more parameters to modify the grant-free uplink transmission mode for the user device, including one or more of the following:
information indicating a change to a resource pool assigned to the user device for the grant-free uplink transmission; and
information indicating a change to at least one transmission parameter for the grant-free uplink transmission, and optionally wherein the at least one transmission parameter for the grant-free uplink transmission comprises at least one of:
an updated modulation and coding scheme (MCS);
an updated transmission repetition parameter that indicates a number of times a packet may be transmitted by the user device; and
an updated transmission power.

5. The apparatus of any of claims 1 to 4 wherein at least one of:
the feedback indicating a continuing transmission mode to be used by the user device to perform a further transmission to the base station comprises at least one of:
Acknowledgement/Negative Acknowledgement (ACK/NACK) feedback for the initial uplink transmission along with a scheduling information for a grant-based (scheduled) uplink transmission if the grant-based (scheduled) transmission mode is to be used by the user device as the continuing transmission mode; and
Acknowledgement/Negative Acknowledgement (ACK/NACK) feedback for the initial uplink transmission along with an indication information for a grant-based (scheduled) uplink transmission if the grant-based (scheduled) transmission mode is to be used by the user device as the continuing transmission mode; and
Acknowledgement/Negative Acknowledgement (ACK/NACK) feedback for the initial uplink transmission without a scheduling information for a grant-based (scheduled) uplink transmission if the grant-free uplink transmission mode is to be used by the user device as the continuing transmission mode; the feedback is received by the user device via at least one of the following:
feedback, received via a first control channel, if the grant-free uplink transmission mode is to be used by the user device as the continuing transmission mode;
feedback, received via a second control channel, different from the first control channel, if the grant-based (scheduled) uplink transmission mode is to be used by the user device as the continuing transmission mode; and
ACK/NACK feedback received via a third control channel and one or more parameters to modify the grant-free uplink transmission mode for the user device received via a fourth control channel, different from the third control channel, if the grant-free uplink transmission mode is to be used by the user device as the continuing transmission mode; and the feedback, indicating a continuing transmission mode to be used by the user device as either a grant-free uplink transmission mode or a grant-based uplink transmission mode, is received via a same control channel, regardless of which continuing transmission mode is indicated by the feedback.

6. An apparatus comprising at least one processor (704) and at least one memory (706) including computer instructions, which when executed by the at least one processor, cause the apparatus to:
receive, by a base station (134) from a user device (132), at least of a portion of an initial uplink transmission;
transmit, by the base station to the user device, feedback indicating a continuing transmission mode to be used by the user device to perform a further transmission to the base station, the indicated continuing transmission mode being at least one of a grant-free uplink transmission mode and a grant-based uplink transmission mode that are both supported by the user device; and
receive, by the base station from the user device, a further transmission via the indicated continuing transmission mode,
wherein receiving at least a portion of an initial uplink transmission comprises receiving at least a portion of an initial grant-free uplink transmission; and wherein the further transmission is at least one of:
a re-transmission of a packet;
a transmission of one or more remaining transport blocks or code blocks of the packet that started transmission by the initial uplink transmission; and
a transmission of a new packet.

7. The apparatus of claim 6 wherein the feedback further comprises:
Acknowledgement/Negative Acknowledgement (ACK/NACK) feedback for the initial uplink transmission.

8. The apparatus of claim 6 or claim 7 wherein the feedback indicating a continuing transmission mode to be used by the user device to perform a further transmission to the base station comprises at least one of the following:
feedback that includes a scheduling information for a grant-based uplink transmission if the grant-based (scheduled) transmission mode is to be used by the user device as the continuing transmission mode;
feedback that includes an indication information for a grant-based uplink transmission if the grant-based (scheduled) transmission mode is to be used by the user device as the continuing transmission mode; and
feedback that indicates using a grant-free uplink transmission if the grant-free uplink transmission mode is to be used by the user device as the continuing transmission mode.

9. The apparatus of claim 8 wherein the feedback further comprises the following if the grant-free uplink transmission mode is to be used by the user device as the continuing transmission mode:
one or more parameters to modify the grant-free uplink transmission mode for the user device, including one or more of the following:
information indicating a change to a resource pool assigned to the user device for the grant-free uplink transmission; and
information indicating a change to at least one transmission parameter for the grant-free uplink transmission.

10. The apparatus of claim 9 wherein the at least one transmission parameter for the grant-free uplink transmission comprises at least one of:
an updated modulation and coding scheme (MCS);
an updated transmission repetition parameter that indicates a number of times a packet may be transmitted by the user device; and
an updated transmission power, and optionally wherein the feedback indicating a continuing transmission mode to be used by the user device to perform a further transmission to the base station comprises at least one of:
Acknowledgement/Negative Acknowledgement (ACK/NACK) feedback for the initial uplink transmission along with a scheduling information for a grant-based (scheduled) uplink transmission if the grant-based (scheduled) transmission mode is to be used by the user device as the continuing transmission mode;
Acknowledgement/Negative Acknowledgement (ACK/NACK) feedback for the initial uplink transmission along with an indication information for a grant-based (scheduled) uplink transmission if the grant-based (scheduled) transmission mode is to be used by the user device as the continuing transmission mode; and
Acknowledgement/Negative Acknowledgement (ACK/NACK) feedback for the initial uplink transmission without a scheduling information for a grant-based (scheduled) uplink transmission if the grant-free uplink transmission mode is to be used by the user device as the continuing transmission mode.

11. A method comprising:
transmitting, by a user device to a base station, an initial uplink transmission;
receiving, by the user device from the base station, feedback indicating a continuing transmission mode to be used by the user device to perform a further transmission to the base station, the indicated continuing transmission mode being at least one of a grant-free uplink transmission mode and a grant-based uplink transmission mode that are both supported by the user device; and
transmitting, by the user device to the base station, a further transmission via the indicated continuing transmission mode,
wherein transmitting an initial uplink transmission comprises transmitting an initial grant-free uplink transmission; and wherein the further transmission is at least one of:
a re-transmission of a packet;
a transmission of one or more remaining transport blocks or code blocks of the packet that started transmission by the initial uplink transmission; and
a transmission of a new packet.

12. A method comprising:
receiving, by a base station (134) from a user device (132), at least of a portion of an initial uplink transmission;
transmitting, by the base station to the user device, feedback indicating a continuing transmission mode to be used by the user device to perform a further transmission to the base station, the indicated continuing transmission mode being at least one of a grant-free uplink transmission mode and a grant-based uplink transmission mode that are both supported by the user device; and
receiving, by the base station from the user device, a further transmission via the indicated continuing transmission mode,
wherein receiving at least a portion of an initial uplink transmission comprises receiving at least a portion of an initial grant-free uplink transmission; and wherein the further transmission is at least one of:
a re-transmission of a packet;
a transmission of one or more remaining transport blocks or code blocks of the packet that started transmission by the initial uplink transmission; and
a transmission of a new packet.

13. A computer program product comprising a non-transitory computer-readable storage medium, the computer-readable storage medium storing executable code that, when executed by at least one data processing apparatus, is configured to cause the at least one data processing apparatus to perform all the steps of the method of any of claims 11 to 12.

## Patentansprüche

1. Einrichtung, die mindestens einen Prozessor (704) und mindestens einen Speicher (706) umfasst, der Computeranweisungen beinhaltet, die, wenn sie von dem mindestens einen Prozessor ausgeführt werden, die Einrichtung zu Folgendem veranlassen:
Übertragen einer anfänglichen Uplinkübertragung durch eine Benutzervorrichtung (132) zu einer Basisstation (134);
Empfangen einer Rückmeldung durch die Benutzervorrichtung von der Basisstation, die einen kontinuierlichen Übertragungsmodus anzeigt, der von der Benutzervorrichtung zu verwenden ist, um eine weitere Übertragung zur Basisstation durchzuführen, wobei der angezeigte kontinuierliche Übertragungsmodus mindestens eines von einem Uplinkübertragungsmodus ohne Gewährung und einem gewährungsbasierten Uplinkübertragungsmodus ist, die beide von der Benutzervorrichtung unterstützt werden; und
Übertragen einer weiteren Übertragung durch die Benutzervorrichtung via den angezeigten kontinuierlichen Übertragungsmodus zur Basisstation, wobei das Veranlassen der Einrichtung, eine anfängliche Uplinkübertragung zu übertragen, das Veranlassen der Einrichtung, eine anfängliche Uplinkübertragung ohne Gewährung zu übertragen; und wobei die weitere Übertragung mindestens eines von Folgendem ist:
eine Neuübertragung eines Pakets;
eine Übertragung von einem oder mehreren verbleibenden Transportblöcken oder Codeblöcken des Pakets, die die Übertragung durch die anfängliche Uplinkübertragung gestartet haben; und
eine Übertragung eines neuen Pakets.

2. Einrichtung nach Anspruch 1, wobei die Rückmeldung außerdem Folgendes umfasst:
eine Bestätigungs/Negativbestätigungs(ACK/NACK)-Rückmeldung für die anfängliche Uplinkübertragung.

3. Einrichtung nach einem der Ansprüche 1 bis 2, wobei die Rückmeldung, die einen kontinuierlichen Übertragungsmodus anzeigt, der von der Benutzervorrichtung zu verwenden ist, um eine weitere Übertragung zur Basisstation durchzuführen, Folgendes umfasst:
eine Rückmeldung, die Planungsinformationen für eine gewährungsbasierte Uplinkübertragung beinhaltet, wenn der gewährungsbasierte (geplante) Übertragungsmodus von der Benutzervorrichtung als der kontinuierliche Übertragungsmodus zu verwenden ist.

4. Einrichtung nach einem der Ansprüche 1 bis 3, wobei die Rückmeldung, die einen kontinuierlichen Übertragungsmodus anzeigt, der von der Benutzervorrichtung zu verwenden ist, um eine weitere Übertragung zur Basisstation durchzuführen, Folgendes umfasst:
eine Rückmeldung, die das Verwenden einer Uplinkübertragung ohne Gewährung anzeigt, wenn der Uplinkübertragungsmodus ohne Gewährung von der Benutzervorrichtung als der kontinuierliche Übertragungsmodus zu verwenden ist, und wobei die Rückmeldung wahlweise Folgendes umfasst, wenn der Uplinkübertragungsmodus ohne Gewährung von der Benutzervorrichtung als der kontinuierliche Übertragungsmodus zu verwenden ist:
einen oder mehrere Parameter zum Modifizieren des Uplinkübertragungsmodus ohne Gewährung für die Benutzervorrichtung, die eines oder mehreres von Folgendem beinhalten:
Informationen, die eine Änderung an einem Ressourcenpool anzeigen, der der Benutzervorrichtung für die Uplinkübertragung ohne Gewährung zugewiesen ist; und
Informationen, die eine Änderung an mindestens einem Übertragungsparameter für die Uplinkübertragung ohne Gewährung anzeigen, und wahlweise wobei der mindestens eine Übertragungsparameter für die Uplinkübertragung ohne Gewährung mindestens eines von Folgendem umfasst:
ein aktualisiertes Modulations- und Codierschema (MCS);
einen aktualisierten Übertragungswiederholungsparameter, der eine Häufigkeit anzeigt, mit der ein Paket von der Benutzervorrichtung übertragen werden kann; und
eine aktualisierte Übertragungsleistung.

5. Einrichtung nach einem der Ansprüche 1 bis 4, wobei mindestens eines von Folgendem gilt:
die Rückmeldung, die einen kontinuierlichen Übertragungsmodus anzeigt, der von der Benutzervorrichtung zu verwenden ist, um eine weitere Übertragung zur Basisstation durchzuführen, umfasst mindestens eines von Folgendem:
eine Bestätigungs/Negativbestätigungs(ACK/NACK)-Rückmeldung für die anfängliche Uplinkübertragung zusammen mit Planungsinformationen für eine gewährungsbasierte (geplante) Uplinkübertragung, wenn der gewährungsbasierte (geplante) Übertragungsmodus von der Benutzervorrichtung als der kontinuierliche Übertragungsmodus zu verwenden ist; und
eine Bestätigungs/Negativbestätigungs(ACK/NACK)-Rückmeldung für die anfängliche Uplinkübertragung zusammen mit Anzeigeinformationen für eine gewährungsbasierte (geplante) Uplinkübertragung, wenn der gewährungsbasierte (geplante) Übertragungsmodus von der Benutzervorrichtung als der kontinuierliche Übertragungsmodus zu verwenden ist; und
eine Bestätigungs/Negativbestätigungs(ACK/NACK)-Rückmeldung für die anfängliche Uplinkübertragung ohne Planungsinformationen für eine gewährungsbasierte (geplante) Uplinkübertragung, wenn der Uplinkübertragungsmodus ohne Gewährung von der Benutzervorrichtung als der kontinuierliche Übertragungsmodus zu verwenden ist; wobei die Rückmeldung von der Benutzervorrichtung via mindestens eines von Folgendem empfangen wird:
eine Rückmeldung, die via einen ersten Steuerkanal empfangen wird, wenn der Uplinkübertragungsmodus ohne Gewährung von der Benutzervorrichtung als der kontinuierliche Übertragungsmodus zu verwenden ist;
eine Rückmeldung, die via einen zweiten Steuerkanal empfangen wird, der sich vom ersten Steuerkanal unterscheidet, wenn der gewährungsbasierte (geplante) Uplinkübertragungsmodus von der Benutzervorrichtung als der kontinuierliche Übertragungsmodus zu verwenden ist; und
eine ACK/NACK-Rückmeldung, die via einen dritten Steuerkanal empfangen wird, und einen oder mehrere Parameter zum Modifizieren des Uplinkübertragungsmodus ohne Gewährung für die Benutzervorrichtung, die via einen vierten Steuerkanal empfangen werden, der sich vom dritten Steuerkanal unterscheidet, wenn der Uplinkübertragungsmodus ohne Gewährung von der Benutzervorrichtung als der kontinuierliche Übertragungsmodus zu verwenden ist; und die Rückmeldung, die einen kontinuierlichen Übertragungsmodus anzeigt, der von der Benutzervorrichtung entweder als ein Uplinkübertragungsmodus ohne Gewährung oder ein gewährungsbasierter Uplinkübertragungsmodus zu verwenden ist, via einen selben Steuerkanal empfangen wird, unabhängig davon, welcher kontinuierliche Übertragungsmodus von der Rückmeldung angezeigt wird.

6. Einrichtung, die mindestens einen Prozessor (704) und mindestens einen Speicher (706) umfasst, der Computeranweisungen beinhaltet, die, wenn sie von dem mindestens einen Prozessor ausgeführt werden, die Einrichtung zu Folgendem veranlassen:
Empfangen von mindestens einem Abschnitt einer anfänglichen Uplinkübertragung durch eine Basisstation (134) von einer Benutzervorrichtung (132);
Übertragen einer Rückmeldung durch die Basisstation zur Benutzervorrichtung, die einen kontinuierlichen Übertragungsmodus anzeigt, der von der Benutzervorrichtung zu verwenden ist, um eine weitere Übertragung zur Basisstation durchzuführen, wobei der angezeigte kontinuierliche Übertragungsmodus mindestens eines von einem Uplinkübertragungsmodus ohne Gewährung und einem gewährungsbasierten Uplinkübertragungsmodus ist, die beide von der Benutzervorrichtung unterstützt werden; und
Empfangen einer weiteren Übertragung durch die Basisstation via den angezeigten kontinuierlichen Übertragungsmodus von der Benutzervorrichtung,
wobei das Empfangen von mindestens einem Abschnitt einer anfänglichen Uplinkübertragung das Empfangen von mindestens einem Abschnitt einer anfänglichen Uplinkübertragung ohne Gewährung umfasst; und wobei die weitere Übertragung mindestens eines von Folgendem ist:
eine Neuübertragung eines Pakets;
eine Übertragung von einem oder mehreren verbleibenden Transportblöcken oder Codeblöcken des Pakets, die die Übertragung durch die anfängliche Uplinkübertragung gestartet haben; und
eine Übertragung eines neuen Pakets.

7. Einrichtung nach Anspruch 6, wobei die Rückmeldung ferner Folgendes umfasst:
eine Bestätigungs/Negativbestätigungs(ACK/NACK)-Rückmeldung für die anfängliche Uplinkübertragung.

8. Einrichtung nach Anspruch 6 oder Anspruch 7, wobei die Rückmeldung, die einen kontinuierlichen Übertragungsmodus anzeigt, der von der Benutzervorrichtung zu verwenden ist, um eine weitere Übertragung zur Basisstation durchzuführen, mindestens eines von Folgendem umfasst:
eine Rückmeldung, die Planungsinformationen für eine gewährungsbasierte Uplinkübertragung beinhaltet, wenn der gewährungsbasierte (geplante) Übertragungsmodus von der Benutzervorrichtung als der kontinuierliche Übertragungsmodus zu verwenden ist;
eine Rückmeldung, die Anzeigeinformationen für eine gewährungsbasierte Uplinkübertragung beinhaltet, wenn der gewährungsbasierte (geplante) Übertragungsmodus von der Benutzervorrichtung als der kontinuierliche Übertragungsmodus zu verwenden ist; und
eine Rückmeldung, die das Verwenden einer Uplinkübertragung ohne Gewährung anzeigt, wenn der Uplinkübertragungsmodus ohne Gewährung von der Benutzervorrichtung als der kontinuierliche Übertragungsmodus zu verwenden ist.

9. Einrichtung nach Anspruch 8, wobei die Rückmeldung, wenn der Uplinkübertragungsmodus ohne Gewährung von der Benutzervorrichtung als der kontinuierliche Übertragungsmodus zu verwenden ist, ferner Folgendes umfasst:
einen oder mehrere Parameter zum Modifizieren des Uplinkübertragungsmodus ohne Gewährung für die Benutzervorrichtung, die eines oder mehreres von Folgendem beinhalten:
Informationen, die eine Änderung an einem Ressourcenpool anzeigen, der der Benutzervorrichtung für die Uplinkübertragung ohne Gewährung zugewiesen ist; und
Informationen, die eine Änderung an mindestens einem Übertragungsparameter für die Uplinkübertragung ohne Gewährung anzeigen.

10. Einrichtung nach Anspruch 9, wobei der mindestens eine Übertragungsparameter für die Uplinkübertragung ohne Gewährung mindestens eines von Folgendem umfasst:
ein aktualisiertes Modulations- und Codierschema (MCS);
einen aktualisierten Übertragungswiederholungsparameter, der eine Häufigkeit anzeigt, mit der ein Paket von der Benutzervorrichtung übertragen werden kann; und
eine aktualisierte Übertragungsleistung und wahlweise wobei die Rückmeldung, die einen kontinuierlichen Übertragungsmodus anzeigt, der von der Benutzervorrichtung zu verwenden ist, um eine weitere Übertragung zur Basisstation durchzuführen, mindestens eines von Folgendem umfasst:
eine Bestätigungs/Negativbestätigungs(ACK/NACK)-Rückmeldung für die anfängliche Uplinkübertragung zusammen mit Planungsinformationen für eine gewährungsbasierte (geplante) Uplinkübertragung, wenn der gewährungsbasierte (geplante) Übertragungsmodus von der Benutzervorrichtung als der kontinuierliche Übertragungsmodus zu verwenden ist;
eine Bestätigungs/Negativbestätigungs(ACK/NACK)-Rückmeldung für die anfängliche Uplinkübertragung zusammen mit Anzeigeinformationen für eine gewährungsbasierte (geplante) Uplinkübertragung, wenn der gewährungsbasierte (geplante) Übertragungsmodus von der Benutzervorrichtung als der kontinuierliche Übertragungsmodus zu verwenden ist; und
eine Bestätigungs/Negativbestätigungs(ACK/NACK)-Rückmeldung für die anfängliche Uplinkübertragung ohne Planungsinformationen für eine gewährungsbasierte (geplante) Uplinkübertragung, wenn der Uplinkübertragungsmodus ohne Gewährung von der Benutzervorrichtung als der kontinuierliche Übertragungsmodus zu verwenden ist.

11. Verfahren, das Folgendes umfasst:
Übertragen einer anfänglichen Uplinkübertragung durch eine Benutzervorrichtung zu einer Basisstation;
Empfangen einer Rückmeldung durch die Benutzervorrichtung von der Basisstation, die einen kontinuierlichen Übertragungsmodus anzeigt, der von der Benutzervorrichtung zu verwenden ist, um eine weitere Übertragung zur Basisstation durchzuführen, wobei der angezeigte kontinuierliche Übertragungsmodus mindestens eines von einem Uplinkübertragungsmodus ohne Gewährung und einem gewährungsbasierten Uplinkübertragungsmodus ist, die beide von der Benutzervorrichtung unterstützt werden; und
Übertragen einer weiteren Übertragung durch die Benutzervorrichtung via den angezeigten kontinuierlichen Übertragungsmodus zur Basisstation,
wobei das Übertragen einer anfänglichen Uplinkübertragung das Übertragen einer anfänglichen Uplinkübertragung ohne Gewährung umfasst und wobei die weitere Übertragung mindestens eines von Folgendem ist:
eine Neuübertragung eines Pakets;
eine Übertragung von einem oder mehreren verbleibenden Transportblöcken oder Codeblöcken des Pakets, die die Übertragung durch die anfängliche Uplinkübertragung gestartet haben; und
eine Übertragung eines neuen Pakets.

12. Verfahren, das Folgendes umfasst:
Empfangen von mindestens einem Abschnitt einer anfänglichen Uplinkübertragung durch eine Basisstation (134) von einer Benutzervorrichtung (132);
Übertragen einer Rückmeldung durch die Basisstation zur Benutzervorrichtung, die einen kontinuierlichen Übertragungsmodus anzeigt, der von der Benutzervorrichtung zu verwenden ist, um eine weitere Übertragung zur Basisstation durchzuführen, wobei der angezeigte kontinuierliche Übertragungsmodus mindestens eines von einem Uplinkübertragungsmodus ohne Gewährung und einem gewährungsbasierten Uplinkübertragungsmodus ist, die beide von der Benutzervorrichtung unterstützt werden; und
Empfangen einer weiteren Übertragung durch die Basisstation via den angezeigten kontinuierlichen Übertragungsmodus von der Benutzervorrichtung,
wobei das Empfangen von mindestens einem Abschnitt einer anfänglichen Uplinkübertragung das Empfangen von mindestens einem Abschnitt einer anfänglichen Uplinkübertragung ohne Gewährung umfasst; und wobei die weitere Übertragung mindestens eines von Folgendem ist:
eine Neuübertragung eines Pakets;
eine Übertragung von einem oder mehreren verbleibenden Transportblöcken oder Codeblöcken des Pakets, die die Übertragung durch die anfängliche Uplinkübertragung gestartet haben; und
eine Übertragung eines neuen Pakets.

13. Computerprogrammprodukt, das ein nichttransitorisches computerlesbares Speichermedium umfasst, wobei das computerlesbare Speichermedium ausführbaren Code speichert, der, wenn er von mindestens einer Datenverarbeitungseinrichtung ausgeführt wird, dazu ausgelegt ist, die mindestens eine Datenverarbeitungseinrichtung zu veranlassen, alle Schritte des Verfahrens nach einem der Ansprüche 11 bis 12 durchzuführen.

## Revendications

1. Appareil comprenant au moins un processeur (704) et au moins une mémoire (706) comportant des instructions informatiques, qui, lorsqu'elles sont exécutées par l'au moins un processeur, amènent l'appareil à :
transmettre, par un dispositif utilisateur (132) à une station de base (134), une transmission de liaison montante initiale ;
recevoir de la station de base, par le dispositif utilisateur, une rétroaction indiquant un mode de transmission continue à utiliser par le dispositif utilisateur pour effectuer une transmission supplémentaire à la station de base, le mode de transmission continue indiqué étant au moins l'un parmi un mode de transmission de liaison montante sans autorisation et un mode de transmission de liaison montante avec autorisation, qui sont tous deux pris en charge par le dispositif utilisateur ; et
transmettre, par le dispositif utilisateur à la station de base, une transmission supplémentaire via le mode de transmission continue indiqué, dans lequel la provocation de la transmission par l'appareil d'une transmission de liaison montante initiale comprend la provocation de la transmission par l'appareil d'une transmission de liaison montante initiale sans autorisation ; et dans lequel la transmission supplémentaire est au moins une parmi :
une retransmission d'un paquet ;
une transmission d'un ou plusieurs blocs de transport ou blocs de code restants du paquet dont la transmission a commencé avec la transmission de liaison montante initiale ; et
une transmission d'un nouveau paquet.

2. Appareil de la revendication 1, dans lequel la rétroaction comprend également :
une rétroaction d'accusé de réception/accusé de réception négatif (ACK/NACK) pour la transmission de liaison montante initiale.

3. Appareil de l'une des revendications 1 et 2, dans lequel la rétroaction indiquant un mode de transmission continue à utiliser par le dispositif utilisateur pour effectuer une transmission supplémentaire à la station de base comprend :
une rétroaction qui comporte des informations de planification pour une transmission de liaison montante avec autorisation si le mode de transmission avec autorisation (planifié) doit être utilisé par le dispositif utilisateur comme mode de transmission continue.

4. Appareil de l'une des revendications 1 à 3, dans lequel la rétroaction indiquant un mode de transmission continue à utiliser par le dispositif utilisateur pour effectuer une transmission supplémentaire à la station de base comprend :
une rétroaction qui indique l'utilisation d'une transmission de liaison montante sans autorisation si le mode de transmission de liaison montante sans autorisation doit être utilisé par le dispositif utilisateur comme mode de transmission continue, et facultativement, si le mode de transmission de liaison montante sans autorisation doit être utilisé par le dispositif utilisateur comme mode de transmission continue, la rétroaction comprend en outre ce qui suit :
un ou plusieurs paramètres pour modifier le mode de transmission de liaison montante sans autorisation pour le dispositif utilisateur, comportant un ou plusieurs des éléments suivants :
des informations indiquant une modification d'un pool de ressources attribué au dispositif utilisateur pour la transmission de liaison montante sans autorisation ; et
des informations indiquant une modification d'au moins un paramètre de transmission pour la transmission de liaison montante sans autorisation, et facultativement dans lequel l'au moins un paramètre de transmission pour la transmission de liaison montante sans autorisation comprend au moins un parmi :
un schéma de modulation et de codage (MCS) mis à jour ;
un paramètre de répétition de transmission mis à jour qui indique le nombre de fois où un paquet peut être transmis par le dispositif utilisateur ; et
une puissance de transmission mise à jour.

5. Appareil de l'une des revendications 1 à 4, dans lequel au moins un parmi :
la rétroaction indiquant un mode de transmission continue à utiliser par le dispositif utilisateur pour effectuer une transmission supplémentaire à la station de base comprend au moins un parmi :
une rétroaction d'accusé de réception/accusé de réception négatif (ACK/NACK) pour la transmission de liaison montante initiale ainsi que des informations de planification pour une transmission de liaison montante avec autorisation (planifiée) si le mode de transmission avec autorisation (planifié) doit être utilisé par le dispositif utilisateur comme mode de transmission continue ; et
une rétroaction d'accusé de réception/accusé de réception négatif (ACK/NACK) pour la transmission de liaison montante initiale ainsi que des informations d'indication pour une transmission de liaison montante avec autorisation (planifiée) si le mode de transmission avec autorisation (planifié) doit être utilisé par le dispositif utilisateur comme mode de transmission continue ; et
une rétroaction d'accusé de réception/accusé de réception négatif (ACK/NACK) pour la transmission de liaison montante initiale sans informations de planification pour une transmission de liaison montante avec autorisation (planifiée) si le mode de transmission de liaison montante sans autorisation doit être utilisé par le dispositif utilisateur comme mode de transmission continue ; la rétroaction étant reçue par le dispositif utilisateur par l'intermédiaire d'au moins l'un des éléments suivants :
une rétroaction reçue via un premier canal de commande, si le mode de transmission de liaison montante sans autorisation doit être utilisé par le dispositif utilisateur comme mode de transmission continue ;
une rétroaction reçue via un deuxième canal de commande différent du premier canal de commande, si le mode de transmission de liaison montante avec autorisation (planifié) doit être utilisé par le dispositif utilisateur comme mode de transmission continue ; et
une rétroaction ACK/NACK reçue via un troisième canal de commande et un ou plusieurs paramètres pour modifier le mode de transmission de liaison montante sans autorisation pour le dispositif utilisateur reçus via un quatrième canal de commande différent du troisième canal de commande, si le mode de transmission de liaison montante sans autorisation doit être utilisé par le dispositif utilisateur comme mode de transmission continue ; et la rétroaction, qui indique un mode de transmission continue à utiliser par le dispositif utilisateur aussi bien comme mode de transmission de liaison montante sans autorisation ou comme mode de transmission de liaison montante avec autorisation, est reçue via un même canal de commande, quel que soit le mode de transmission continue indiqué par la rétroaction.

6. Appareil comprenant au moins un processeur (704) et au moins une mémoire (706) comportant des instructions informatiques, qui, lorsqu'elles sont exécutées par l'au moins un processeur, amènent l'appareil à :
recevoir d'un dispositif utilisateur (132), par une station de base (134), au moins une partie d'une transmission de liaison montante initiale ;
transmettre, par la station de base au dispositif utilisateur, une rétroaction indiquant un mode de transmission continue à utiliser par le dispositif utilisateur pour effectuer une transmission supplémentaire à la station de base, le mode de transmission continue indiqué étant au moins l'un parmi un mode de transmission de liaison montante sans autorisation et un mode de transmission de liaison montante avec autorisation, qui sont tous deux pris en charge par le dispositif utilisateur ; et
recevoir du dispositif utilisateur, par la station de base, une transmission supplémentaire via le mode de transmission continue indiqué,
dans lequel la réception d'au moins une partie d'une transmission de liaison montante initiale comprend la réception d'au moins une partie d'une transmission de liaison montante initiale sans autorisation ; et dans lequel la transmission supplémentaire est au moins une parmi :
une retransmission d'un paquet ;
une transmission d'un ou plusieurs blocs de transport ou blocs de code restants du paquet dont la transmission a commencé avec la transmission de liaison montante initiale ; et
une transmission d'un nouveau paquet.

7. Appareil de la revendication 6, dans lequel la rétroaction comprend en outre :
une rétroaction d'accusé de réception/accusé de réception négatif (ACK/NACK) pour la transmission de liaison montante initiale.

8. Appareil de la revendication 6 ou la revendication 7, dans lequel la rétroaction indiquant un mode de transmission continue à utiliser par le dispositif utilisateur pour effectuer une transmission supplémentaire à la station de base comprend au moins l'un des éléments suivants :
une rétroaction qui comporte des informations de planification pour une transmission de liaison montante avec autorisation si le mode de transmission avec autorisation (planifié) doit être utilisé par le dispositif utilisateur comme mode de transmission continue ;
une rétroaction qui comporte des informations d'indication pour une transmission de liaison montante avec autorisation si le mode de transmission avec autorisation (planifié) doit être utilisé par le dispositif utilisateur comme mode de transmission continue ; et
une rétroaction qui indique l'utilisation d'une transmission de liaison montante sans autorisation si le mode de transmission de liaison montante sans autorisation doit être utilisé par le dispositif utilisateur comme mode de transmission continue.

9. Appareil de la revendication 8 dans lequel, si le mode de transmission de liaison montante sans autorisation doit être utilisé par le dispositif utilisateur comme mode de transmission continue, la rétroaction comprend en outre ce qui suit :
un ou plusieurs paramètres pour modifier le mode de transmission de liaison montante sans autorisation pour le dispositif utilisateur, comportant un ou plusieurs des éléments suivants :
des informations indiquant une modification d'un pool de ressources attribué au dispositif utilisateur pour la transmission de liaison montante sans autorisation ; et
des informations indiquant une modification d'au moins un paramètre de transmission pour la transmission de liaison montante sans autorisation.

10. Appareil de la revendication 9 dans lequel l'au moins un paramètre de transmission pour la transmission de liaison montante sans autorisation comprend au moins un parmi :
un schéma de modulation et de codage (MCS) mis à jour ;
un paramètre de répétition de transmission mis à jour qui indique le nombre de fois où un paquet peut être transmis par le dispositif utilisateur ; et
une puissance de transmission mise à jour, et facultativement dans lequel la rétroaction indiquant un mode de transmission continue à utiliser par le dispositif utilisateur pour effectuer une transmission supplémentaire à la station de base comprend au moins un parmi :
une rétroaction d'accusé de réception/accusé de réception négatif (ACK/NACK) pour la transmission de liaison montante initiale ainsi que des informations de planification pour une transmission de liaison montante avec autorisation (planifiée) si le mode de transmission avec autorisation (planifié) doit être utilisé par le dispositif utilisateur comme mode de transmission continue ;
une rétroaction d'accusé de réception/accusé de réception négatif (ACK/NACK) pour la transmission de liaison montante initiale ainsi que des informations d'indication pour une transmission de liaison montante avec autorisation (planifiée) si le mode de transmission avec autorisation (planifié) doit être utilisé par le dispositif utilisateur comme mode de transmission continue ; et
une rétroaction d'accusé de réception/accusé de réception négatif (ACK/NACK) pour la transmission de liaison montante initiale sans informations de planification pour une transmission de liaison montante avec autorisation (planifiée) si le mode de transmission de liaison montante sans autorisation doit être utilisé par le dispositif utilisateur comme mode de transmission continue.

11. Procédé comprenant les étapes suivantes :
transmettre, par un dispositif utilisateur à une station de base, une transmission de liaison montante initiale ;
recevoir de la station de base, par le dispositif utilisateur, une rétroaction indiquant un mode de transmission continue à utiliser par le dispositif utilisateur pour effectuer une transmission supplémentaire à la station de base, le mode de transmission continue indiqué étant au moins l'un parmi un mode de transmission de liaison montante sans autorisation et un mode de transmission de liaison montante avec autorisation, qui sont tous deux pris en charge par le dispositif utilisateur ; et
transmettre, par le dispositif utilisateur à la station de base, une transmission supplémentaire via le mode de transmission continue indiqué,
dans lequel la transmission d'une transmission de liaison montante initiale comprend la transmission d'une transmission de liaison montante initiale sans autorisation ; et dans lequel la transmission supplémentaire est au moins une parmi :
une retransmission d'un paquet ;
une transmission d'un ou plusieurs blocs de transport ou blocs de code restants du paquet dont la transmission a commencé avec la transmission de liaison montante initiale ; et
une transmission d'un nouveau paquet.

12. Procédé comprenant les étapes suivantes :
recevoir d'un dispositif utilisateur (132), par une station de base (134), au moins d'une partie d'une transmission de liaison montante initiale ;
transmettre, par la station de base au dispositif utilisateur, rétroaction indiquant un mode de transmission continue à utiliser par le dispositif utilisateur pour effectuer une transmission supplémentaire à la station de base, le mode de transmission continue indiqué étant au moins l'un parmi un mode de transmission de liaison montante sans autorisation et un mode de transmission de liaison montante avec autorisation, qui sont tous deux pris en charge par le dispositif utilisateur ; et
recevoir du dispositif utilisateur, par la station de base, une transmission supplémentaire via le mode de transmission continue indiqué,
dans lequel la réception d'au moins une partie d'une transmission de liaison montante initiale comprend la réception d'au moins une partie d'une transmission de liaison montante initiale sans autorisation ; et dans lequel la transmission supplémentaire est au moins une parmi :
une retransmission d'un paquet ;
une transmission d'un ou plusieurs blocs de transport ou blocs de code restants du paquet dont la transmission a commencé avec la transmission de liaison montante initiale ; et
une transmission d'un nouveau paquet.

13. Produit de programme informatique comprenant un support de stockage non transitoire lisible par ordinateur, le support de stockage lisible par ordinateur stockant un code exécutable qui, lorsqu'il est exécuté par au moins un appareil de traitement de données, est configuré pour amener l'au moins un appareil de traitement de données à effectuer toutes les étapes du procédé de l'une des revendications 11 et 12.
